# EUROPEAN PATENT APPLICATION

(11) **EP 2 295 796 A1**
(43) Date of publication of application: **16.03.2011**
(21) Application number: 08777898.1
(22) Date of filing: 04.07.2008
(51) Int. Cl.: F03D 11/00

(54) **WIND-POWER GENERATION DEVICE**

(71) Applicant: Mitsubishi Heavy Industries, Ltd., Tokyo 108-8215 (JP)
(72) Inventor: KAMATA, Keitaro, Nagasaki-shi Nagasaki 851-0392 (JP); YUGE, Atsushi, Nagasaki-shi Nagasaki 851-0392 (JP)
(74) Representative: Intès, Didier Gérard André
(86) International application number: PCT/JP2008/062183
(87) International publication number: WO 2010/001479

(57) **Abstract**

A wind power generator is provided which is configured to take a measure against a decrease in oil temperature which measure requires no new large-capacity power source. A wind power generator (1) including a hydraulic pump (12) configured to be stopped when a wind turbine is shut down further includes a bypass channel (25) branching off from an discharge side channel of the hydraulic pump (12) and connected to an oil tank (11), an electromagnetic valve (26) provided in the bypass channel (25) and opened when the hydraulic pump 12 is started, a temperature sensor (31) configured to detect the oil temperature of hydraulic operating oil, and a controller 30 configured to carry out pump inching after the hydraulic pump (12) has been started, to raise the temperature of the hydraulic operating oil to a predetermined value.

## Description

### Technical Field

The present invention relates to a wind power generator suitable for installation in a cold weather.

### Background Art

In the prior art, in a propeller wind turbine used in a wind power generator, a plurality of blades (wind turbine blades) attached to a rotor head rotate with the wind. The rotation speed of the rotor head is increased via a gear box coupled to a rotating shaft. The increased rotation drives a power generator, which thus generates power.
Such a wind power generator performs pitch control in which the blade pitch angles of the blades are individually hydraulically adjusted so as to obtain a predetermined rotation speed and predetermined output power depending on wind conditions. Moreover, for rotating and sliding portions of the wind power generator such as a gear box and a bearing, lubricant oil is circulated by a pump to lubricate relevant areas.

Furthermore, when started, a hydraulic pump is not filled with operating oil. Thus, if operation is continued after the start of the operation, problems such as seize-up of sliding surfaces may occur. To prevent this, inching is carried out in which the pump is repeatedly started and stopped in a short time (See, for example, Patent Citation 1).
Patent Citation 1: Japanese Unexamined Patent Application, Publication "Hei" No. 8-193591

### Disclosure of Invention

When the above-described power generator is installed in a cold weather, a continued shutdown state may reduce the oil temperature of operating oil and lubricant oil for a hydraulic system. There is a great difference between the reduced oil temperature and the temperature of equipment. Consequently, heat shock or the like may occur to damage the equipment.
Thus, in conventional wind power generators, a heater is installed in an oil storage tank to increase the temperature. However, the heater can increase only the oil temperature around the heater. This is disadvantageously inefficient. Furthermore, besides a power source for driving an electric motor for a hydraulic pump and the like, a large-capacity power source for the heater needs to be newly provided.

Thus, particularly for wind power generators installed in cold weather, a measure for preventing a decrease in oil temperature during shutdown is desirably taken which measure replaces the use of a heater, which requires addition of a new large-capacity power source.
In view of these circumstances, an object of the present invention is to provide a wind power generator configured to take a measure against a decrease in oil temperature which measure requires no new large-capacity power source.

The present invention takes the following means to solve the above-described problems.
In a first aspect of a wind power generator according to the present invention, there is provided a wind power generator including an oil supply pump configured to be stopped when a wind turbine is shut down, the wind power generator further including a bypass channel branching off from a discharge side channel of the oil supply pump and connected to an oil storage tank, an on-off valve provided in the bypass channel and opened when the oil supply pump is started, a temperature detecting section configured to detect an oil temperature of the oil, and a control section configured to carry out pump inching after the oil supply pump has been started, to raise the temperature of the oil to a predetermined value.

Such a wind power generator includes the bypass channel branching off from the discharge side channel of the oil supply pump and connected to the oil storage tank, the on-off valve provided in the bypass channel and opened when the oil supply pump is started, the temperature detecting section configured to detect oil temperature of the oil, and the control section configured to carry out pump inching after the oil supply pump has been started, to raise the temperature of the oil to the predetermined value. Thus, if the oil temperature is lower than the predetermined value when the oil supply pump starts operating, pump inching is carried out to gradually supply oil to a piping system. Hence, the oil temperature of the oil supplied to the piping system rises to a predetermined value because of friction with the piping, the self-friction of the oil, and the like. This reduces a rapid change in temperature. At this time, the on-off valve in the bypass channel is open. Hence, the piping system can be prevented from undergoing a rapid pressure increase.

In the above-described wind power generator, the pump inching is preferably carried out by inputting a pulse wave to a fixed-capacity motor configured to drive the oil supply pump. Then, the pump inching can be carried out so that the oil supply pump performs an ON/OFF operation corresponding to the pulse wave.

In the above-described wind power generator, the pump inching is preferably carried out by controlling a current value of a variable-capacity motor configured to drive the oil supply pump. Thus, the pump inching can be carried out so that the current value of the variable-capacity motor is controlled to vary a rotation speed.

In a second aspect of a wind power generator according to the present invention, there is provided a wind power generator including an oil supply pump configured to be stopped when a wind turbine is shut down, the oil supply pump being of a variable discharge amount type, the wind power generator further including a bypass channel branching off from a discharge side channel of the oil supply pump and connected to an oil storage tank, an on-off valve provided in the bypass channel and opened when the oil supply pump is started, a temperature detecting section configured to detect an oil temperature of the oil, and a control section configured to control a flow rate of the oil supply pump when the oil supply pump starts operation, to raise the temperature of the oil to a predetermined value.

Such a wind power generator includes the bypass channel branching off from the discharge side channel of the oil supply pump and connected to the oil storage tank, the oil supply pump being of a variable discharge amount type, the on-off valve provided in the bypass channel and opened when the oil supply pump is started, the temperature detecting section configured to detect oil temperature of the oil, and the control section configured to control the flow rate of the oil supply pump when the oil supply pump starts operation, to raise the temperature of the oil to a predetermined value. Thus, if the oil temperature is lower than a predetermined value when the oil supply pump starts operation, the flow rate of the oil supply pump, which is of a variable discharge amount type, is controlled so as to gradually supply oil to a piping system. Hence, the oil temperature of the oil supplied to the piping system rises to a predetermined value because of friction with the piping, the self-friction of the oil, and the like. This reduces a rapid change in temperature. At this time, the on-off valve in the bypass channel is open. Hence, the piping system can be prevented from undergoing a rapid pressure increase.

According to the above-described invention, there is provided a wind power generator configured to take a measure against a decrease in oil temperature based on pump inching effectively utilizing existing facilities or flow rate control using a variable-discharge-amount pump, that is, a measure against a decrease in oil temperature which measure eliminates the need to add a new large-capacity power source.

### Brief Description of Drawings

[FIG. 1] Fig. 1 is a diagram of an essential part of an oil supply pump and its peripheral equipment, showing a first embodiment of a wind power generator according to the present invention.
[FIG. 2] Fig. 2 is a diagram schematically showing the wind power generator.
[FIG. 3] Fig. 3 is a diagram of an essential part of a modification of the oil supply pump and its peripheral equipment shown in Fig. 1.
[FIG. 4] Fig. 4 is a diagram of an essential part of an oil supply pump and its peripheral equipment, showing a second embodiment of a wind power generator according to the present invention.
[FIG. 5] Fig. 5 is a diagram of an essential part of an oil supply pump and its peripheral equipment in a wind power generator according to the present invention, showing an example in which the oil supply pump is applied to a bearing.

### Explanation of Reference:

- 1: Wind power generator
- 3: Nacelle
- 4: Rotor head
- 5: Blade (wind turbine blade)
- 10: Pitch controller
- 11, 11A: Oil tank (oil storage tank)
- 12, 12A: Hydraulic pump (oil supply pump)
- 12B: Lubricant oil pump (oil supply pump)
- 13, 13A: Electric motors
- 22: Hydraulic pipe
- 22A: Lubricant supply pipe
- 25: Bypass channel
- 26: Electromagnetic valve (on-off valve)
- 30, 30A, 30B, 30C: Controller
- 31: Temperature sensor (temperature detecting section)
- 40: Gear box

### Best Mode for Carrying Out the Invention

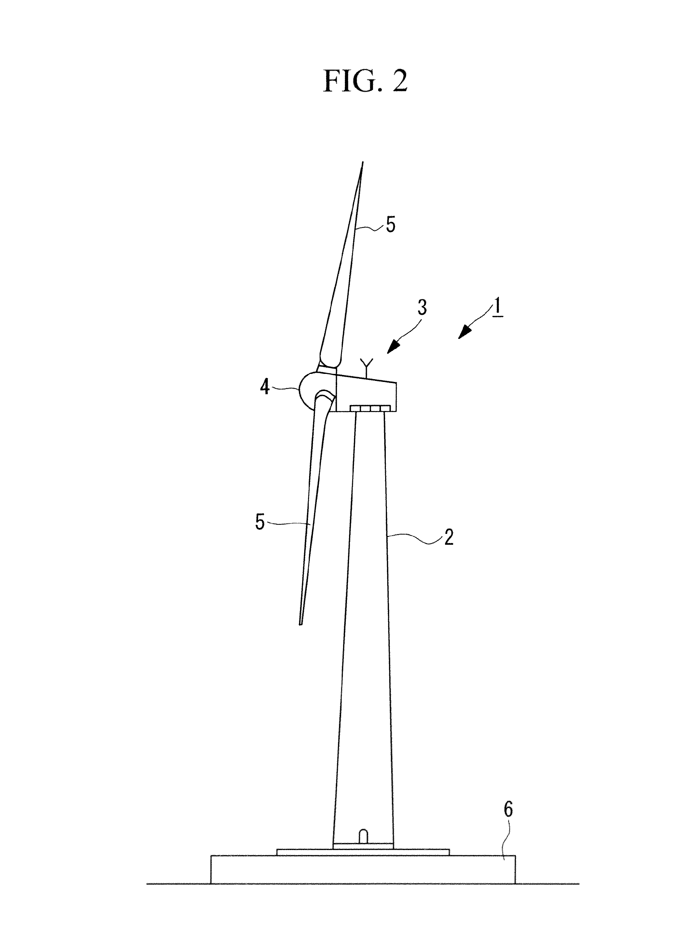

An embodiment of a blade pitch angle controller and a wind power generator according to the present invention will be described with reference to the drawings.
A wind power generator 1 shown in Fig. 2 includes a pillar 2 provided upright on a base 6, a nacelle 3 installed at the upper end of the pillar 2, and a rotor head 4 provided on the nacelle 3 so as to be rotatable around a substantially horizontal axis.

The rotor head 4 includes a plurality of (in the illustrated example, three) blades (wind turbine blade) 5 attached thereto radially around the axis of rotation thereof. Thus, the force of wind blown against the blades 5 in the direction of the axis of rotation of the rotor head 4 is converted into power required to rotate the rotor head 4 around the axis of rotation.
The illustrated wind power generator 1 is of what is called an up wind type in which the blades 5 rotate in front of the nacelle 3.

In the wind power generator 1, for example, hydraulic pressure is used for a pitch controller configured to individually control the blade pitch angles of the blades 5. The wind power generator 1 also includes a lubricator configured to supply lubricant oil to rotating and sliding portions such as a bearing that supports a spindle rotating integrally with the blades 5 and a gear box that increases the rotation speed of the blades 5 and spindle. An oil supply pump configured to feed hydraulic operating oil or lubricant oil is used for the pitch controller and the lubricator.

### <First Embodiment>

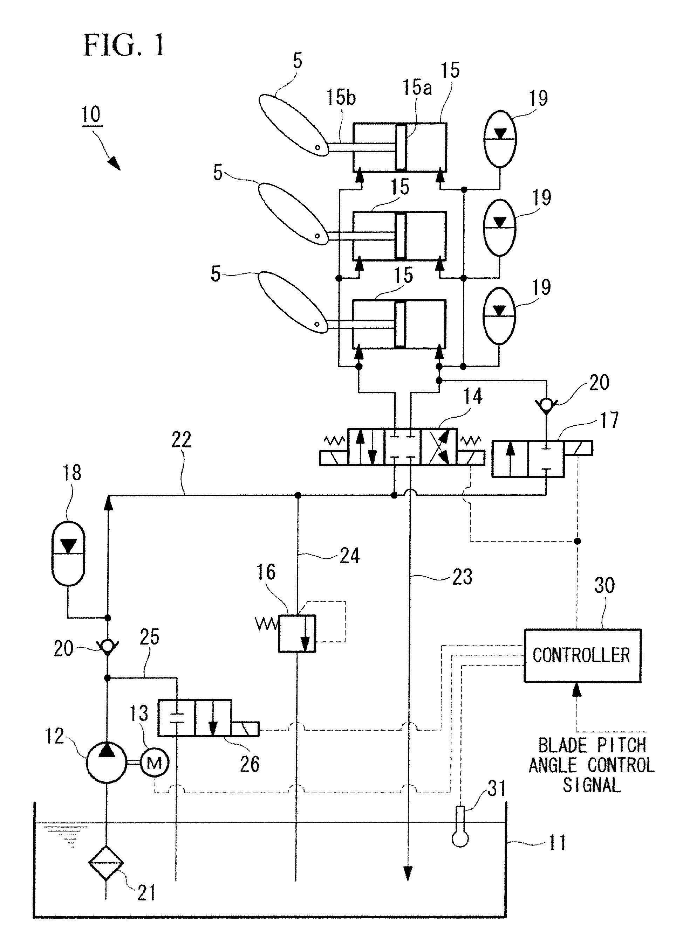

Fig. 1 shows the pitch controller 10 for the blades 5 as an example of a general configuration of the oil supply pump and its peripheral equipment. The pitch controller 10 can individually hydraulically control the blade pitch angles of the three blades 5 attached to the rotor head 4.

In Fig. 1, reference numeral 11 denotes an oil tank in which hydraulic operating oil is stored. Reference numeral 12 denotes a hydraulic pump driven by an electric motor 13. Reference numeral 14 denotes a servo valve configured to switch the flow direction of hydraulic pressure. Reference numeral 15 denotes a blade pitch cylinder configured to vary the blade pitch angle of each of the blades 5. Reference numerals 16 and 17 denote a safety valve and an emergency stop valve, respectively. Reference numerals 18 and 19 denote accumulators. Reference numerals 20 and 21 denote a check valve and straightener, respectively. These pieces of equipment are connected together by a hydraulic pipe 22 so as to form the pitch controller 10.
The electric motor 13 is classified into a fixed capacity type and a variable capacity type, and the present embodiment uses the electric motor 13 of the fixed capacity type. The electric motor drives a hydraulic pump 12 such as a gear pump which has a discharge amount varying depending on the rotation speed.

Furthermore, the pitch controller 10 includes a controller 30 configured to receive a blade pitch angle control signal and the like to control the operation of the electric motor 13, the channel switching operation of the servo valve 14, the operation of the emergency stop valve 17, and the like.
When the wind power generator 1 is shut down, the pitch controller 10 is also stopped, preventing the electric motor 13 and the hydraulic pump 12 from being operated.

Now, the operation of the above-described pitch controller 10 will be described in brief.
When the hydraulic pump 12 is operated, the hydraulic operating oil in the oil tank 11 is sucked and the oil pressure is increased. Thus, the hydraulic operating oil is fed through the hydraulic pipe 22 to the servo valve 14.

When a blade pitch angle control signal is input to the controller 30, the servo valve 14 switches the hydraulic channel depending on the direction in which the pitch angle of the blade 5 is changed. The hydraulic operating oil supplied to blade pitch cylinder 15 presses a piston 15a rightward or leftward depending on the hydraulic channel set by the servo valve 14. As a result, the blade 5 coupled to the piston rod 15b is pivotally moved depending on the direction in which the piston 15a and the piston rod 15b move. The blade 5 is thus adjusted to the desired blade pitch angle.
The piston 15a fed with hydraulic operating oil moves through the blade pitch cylinder 15 to press the opposite hydraulic operating oil. Thus, the hydraulic operating oil pressed by the piston 15a passes through the servo valve 15 and a return channel 23 back to the oil tank 11.

The safety vale 16 is open in an abnormal state in which a hydraulic circuit is at a high pressure with a predetermined value or larger. As a result, the hydraulic operating oil supplied by the hydraulic pump 12 is returned through the return channel 24 to the oil tank 11.
The emergency stop valve 17 is a normally closed electromagnetic valve and is opened, for example, when the servo valve 14 becomes defective, to supply hydraulic operating oil to a predetermined side of the blade pitch cylinder 15. As a result, the blade 5 can move pivotally to a predetermined emergency stop position to deal with the defect in the pitch controller 10.

According to a first aspect of the present invention, the pitch controller 10 of the above-described wind power generator 1 includes a bypass channel 25 branching off from an discharge side channel of the hydraulic supply pump 12 and connected to the oil tank 11, an electromagnetic valve 26 provided in the bypass channel 25 so as to serve as an on-off valve which is opened when the hydraulic pump 12 is started, a temperature sensor (temperature detecting section) 31 configured to detect the oil temperature of hydraulic operating oil, and a control section configured to carry out pump inching after the hydraulic pump 12 has been started, to raise the temperature of the hydraulic operating oil to a predetermined value. In this case, the control section includes required circuits and the like incorporated in the controller 30.

If the wind power generator 1 is installed in a cold weather, then during shutdown, the temperature of the hydraulic operating oil is lowered by the outside air temperature. This leads to the increased viscosity and significantly degraded fluidity of the hydraulic operating oil.
Thus, when the oil pump 12 starts operation in order to start or resume operating the wind power generator 1, if the oil temperature of the hydraulic operating oil is lower than a predetermined value, pump inching is carried out in which the hydraulic pump 12 is repeatedly started and stopped in a short time. Thus, the hydraulic operating oil is gradually supplied to the piping system of the hydraulic pipe 22. In this case, for example, the oil temperature in the oil tank 11 detected by the temperature sensor 31 may be adopted as the oil temperature of the hydraulic operating oil.

If the above-described pump inching is carried out, the controller 30 initially opens the electromagnetic valve 26 to make the bypass channel 25 active.
Thereafter, a pulse wave is input to the fixed-capacity electric motor 13 to carry out pump inching in which the hydraulic pump 12 performs an ON/OFF operation corresponding to the pulse wave. Then, the hydraulic pump 12 is repeatedly operated and stopped in a short time. Such pump inching is continued until the temperature sensor 31 detects that the oil temperature has increased to a predetermined value.

As a result, the oil temperature of the hydraulic operating oil supplied to the hydraulic pipe 22 rises gradually to the predetermined value as a result of the friction between the hydraulic operating oil and the piping wall surface, the self-friction of the hydraulic operating oil, and the like. This reduces a variation in the temperature of the hydraulic pipe 22 supplied with the hydraulic operating oil and the equipment provided in the hydraulic pipe 22; otherwise the temperature rises rapidly from a cold temperature state in which the hydraulic pipe and equipment are cooled by the outside air temperature.
In this case, since the bypass channel 25 is active, the hydraulic operating oil can return through the bypass channel 25 to the oil tank 11. Thus, the internal pressure of the hydraulic pipe 22 can be prevented from increasing rapidly.

The above-described pump inching can be carried out by transmitting a pulse wave to the electric motor 13. Hence, for example, compared to an apparatus configured to increase the oil pressure using a heater, which requires a large-capacity power source facility, the present apparatus eliminates the need to add a large-scale facility. That is, existing facilities can be effectively utilized to prevent or suppress a possible increase in the difference in temperature between the hydraulic operating oil and both the piping and equipment. As a result, the piping and equipment can be reliably and inexpensively prevented from being damaged by heat shock or the like.

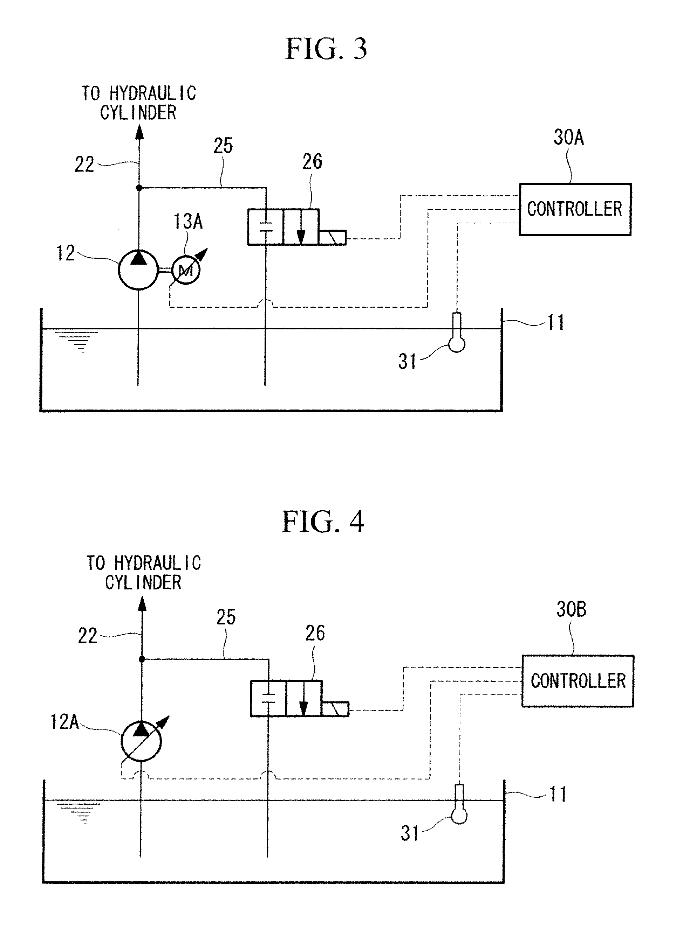

In the above-described embodiment, the electric motor 13 for the hydraulic pump 12 is of a fixed capacity type. However, for example, as shown in a modification shown in Fig. 3, an electric motor 13A configured to drive the hydraulic pump 12 may be of a variable capacity type, and a controller 30A may control a current value provided to the electric motor 13A to carry out pump inching.

In this configuration, the rotation speed of the variable-capacity electric motor 13A varies depending on the current value provided by the power source. Thus, pump inching can be carried out so that the hydraulic pump 12 is repeatedly operated and stopped in a short time. Furthermore, as is the case with the above-described embodiment, existing facilities can be effectively utilized to prevent or suppress a possible increase in the difference in temperature between the hydraulic operating oil and both the piping and equipment. As a result, the piping and equipment can be reliably and inexpensively prevented from being damaged by heat shock or the like.

### <Second Embodiment>

Fig. 2 shows an essential part of an example of a general configuration of an oil supply pump and its peripheral equipment in a pitch controller 10. Components similar to those of the above-described embodiment are denoted by the same reference numerals and will not be described below in detail.
The second embodiment is different from the first embodiment in that the above-described pump inching is not carried out but a hydraulic pump 12A of a variable capacity type is adopted as an oil supply pump to supply a hydraulic pipe 22 with a flow rate of hydraulic operating oil corresponding to the oil temperature.

That is, the hydraulic pump 12A is of a variable discharge amount type that discharges a variable amount of oil like, for example, a swash plate pump. A controller 30B includes a control section configured to control the flow rate of the hydraulic pump 12A when the hydraulic pump 12A starts or resumes operation, to raise the temperature of the hydraulic operating oil to a predetermined value.

According to such a wind power generator, as is the case with the above-described embodiment, if the oil temperature is lower than a predetermined value when the hydraulic pump 12A starts operation, the flow rate of the hydraulic pump 12A is controlled so as to gradually supply hydraulic operating oil to the hydraulic pipe 22. Thus, the oil temperature of hydraulic operating oil supplied to the hydraulic pipe 22 rises to a predetermined value as a result of friction with the hydraulic pipe 22 and the self-friction of the hydraulic operating oil. Thus, a rapid change in temperature is reduced. At this time, an electromagnetic valve 26 in a bypass channel 25 is open. Hence, the hydraulic pipe 22 can be prevented from undergoing a rapid pressure increase.

Thus, the above-described invention can provide a wind power generator configured to take a measure against a decrease in oil temperature based on pump inching effectively utilizing existing facilities or flow rate control using a variable-discharge-amount pump, that is, a measure against a decrease in oil temperature which measure eliminates the need to add a new large-capacity power source.

Furthermore, in the above-described embodiment and modification, the target oil is hydraulic operating oil for the pitch controller 10. However, the present invention is not limited to this aspect. The present invention is also applicable to, for example, lubricant oil supplied to rotating and sliding portions provided in the bearing and gear box of the wind power generator 1.

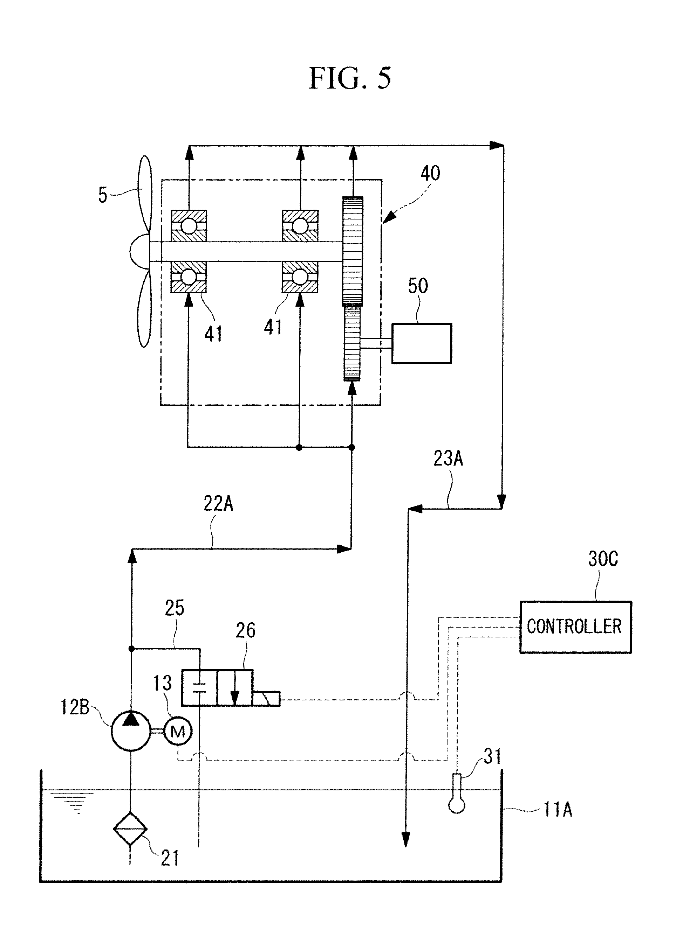

The diagram in Fig. 5 shows an example in which the present invention is applied to a lubricant oil system that supplies lubricant oil to a gear box 40 configured to increase the rotation speed of blades 5 to drive a generator 50. In the description below, components similar to those of the above-described embodiment are denoted by the same reference numerals and will not be described below in detail.
In the illustrated configuration example, a lubricant oil pump 12B is operated to supply lubricant oil in an oil tank 11A to a bearing 41 and a meshing portion of a gear 42 which are rotating and sliding portions of the gear box 50. For example, a gear pump driven by an electric motor 13 of a fixed capacity type is used as the lubricant oil pump 12B.
Lubricant oil discharged by the lubricant oil pump 12B is fed through a lubricant oil supply pipe 22A to the bearing 41 and the gear 42. The lubricant oil lubricates required portions and is then returned through a lubricant oil return channel 23A to the oil tank 11.

Even the lubricant oil system configured as described above includes the bypass channel 25 branching off from a discharge side channel of the lubricant oil pump 12B and connected to the oil tank 11, the electromagnetic valve 26 provided in the bypass channel 25 so as to serve as an on-off valve opened when the lubricant oil pump 12B is started, a temperature sensor 31 configured to detect the oil temperature of lubricant oil, and a controller 30C configured to carry out pump inching after the hydraulic pump 12B has been started, to raise the temperature of the hydraulic operating oil to a predetermined value, the controller 30C including required circuits and the like incorporated therein.

Thus, if during shutdown, the temperature of the lubricant oil is lowered by the outside air temperature, leading to the increased viscosity and significantly degraded fluidity of the lubricant oil, then when the lubricant oil pump 12B starts operation in order to start or resume operating the wind power generator 1, the temperature of the lubricant oil is checked based on a detected value from the temperature sensor 31. As a result, if the oil temperature of the lubricant oil is lower than a predetermined value, pump inching is carried out in which the lubricant pump 12B is repeatedly started and stopped in a short timed. Thus, the lubricant oil is gradually supplied to the piping system of the lubricant oil supply pipe 22A.

To carry out the above-described pump inching, the controller 30C first opens the electromagnetic valve 26 to make the bypass channel 25 active.
Thereafter, the controller 30C inputs a pulse wave to the fixed-capacity electric motor 13 to carry out pump inching in which the lubricant oil pump 12B performs an ON/OFF operation corresponding to the pulse wave. Thus, the lubricant oil pump 12B is repeatedly operated and stopped in a short time. Such pump inching is continued until the temperature sensor 31 detects that the oil temperature has increased to a predetermined value. Thus, the internal pressure of the hydraulic pipe 22 can be prevented from increasing rapidly.

The above-described pump inching for the lubricant oil system is also not limited to the configuration in which the electric motor 13 of the fixed capacity type performs an ON/OFF operation in response to a pulse wave. An electric motor 13A of a variable capacity type may be adopted or the lubricant oil pump 12B may be of a variable capacity type.
The present invention is not limited to the above-described embodiments and may be appropriately varied without departing from the spirits of the present invention.

## Claims

1. A wind power generator comprising an oil supply pump configured to be stopped when a wind turbine is shut down, the wind power generator further comprising:
a bypass channel branching off from a discharge side channel of the oil supply pump and connected to an oil storage tank;
an on-off valve provided in the bypass channel and opened when the oil supply pump is started;
a temperature detecting section configured to detect an oil temperature of the oil; and
a control section configured to carry out pump inching after the oil supply pump has been started, to raise the temperature of the oil to a predetermined value.

2. The wind power generator according to claim 1, wherein the pump inching is carried out by inputting a pulse wave to a fixed-capacity motor configured to drive the oil supply pump.

3. The wind power generator according to claim 1, wherein the pump inching is carried out by controlling a current value of a variable-capacity motor configured to drive the oil supply pump.

4. A wind power generator comprising an oil supply pump configured to be stopped when a wind turbine is shut down,
the oil supply pump being of a variable discharge amount type, the wind power generator further comprising:
a bypass channel branching off from a discharge side channel of the oil supply pump and connected to an oil storage tank;
an on-off valve provided in the bypass channel and opened when the oil supply pump is started;
a temperature detecting section configured to detect an oil temperature of the oil; and
a control section configured to control a flow rate of the oil supply pump when the oil supply pump starts operation, to raise the temperature of the oil to a predetermined value.
